# EUROPÄISCHE PATENTSCHRIFT

(11) **EP 1 061 714 B1**
(45) Veröffentlichungstag und Bekanntmachung des Hinweises auf die Patenterteilung: **12.07.2006**
(21) Anmeldenummer: 00112243.1
(22) Anmeldetag: 07.06.2000
(51) Int. Cl.: H04M 1/274, G06F 3/023

(54) **Verfahren zum Auswählen von Bezeichnungen aus einer vorgegebenen Liste**
Method for selecting a designation from a predefined list
Méthode de sélection de désignations dans une liste prédéfinie

(30) Priorität: 15.06.1999 DE 19927280
(43) Veröffentlichungstag der Anmeldung: 20.12.2000
(73) Patentinhaber: Nokia Corporation, 02150 Espoo (FI)
(72) Erfinder: Hanebrink, Thomas, 44879 Bochum (DE)
(74) Vertreter: Becker Kurig Straus

(56) Entgegenhaltungen:
- EP-A- 0 679 003
- EP-A- 0 789 224
- EP-A- 0 901 262

## Beschreibung

Die Erfindung betrifft ein Verfahren zum Auswählen von Bezeichnungen aus einer vorgegebenen Liste nach dem Oberbegriff des Anspruchs 1.

Bei der Bedienung von elektrischen oder elektronischen Geräten, wie z. B. Navigationssystemen, Rundfunkgeräten, Mobiltelefonen oder dergleichen ist es häufig erforderlich, daß aus einer gespeicherten Liste, die beispielsweise die mit Hilfe eines Navigationssystems ansteuerbaren Städte oder Straßennamen, die Bezeichnungen der von einem Rundfunkgerät empfangenen Sendestationen oder die in einem Telefonbuch eines Mobiltelefons gespeicherten Namen enthält, eine Bezeichnung auszuwählen, die bei der weiteren Benutzung des elektronischen Geräts für entsprechende Such-oder Einstellaufgaben verwendet werden soll.

Bei einem bekannten Navigationssystem wird zur Zieleingabe die gewünschte Adresse durch Auswahl von Städte- und Straßennamen aus jeweiligen Adresslisten durchgeführt. Hierzu wird zunächst die gewünschte Bezeichnung Zeichen für Zeichen, also Buchstabe für Buchstabe, eingegeben, in dem die einzelnen Zeichen aus einer Zeichenliste mit Hilfe eines Dreh-Drückstellers ausgegeben wird, wobei ein gewünschtes Zeichen durch Drehen des Dreh-Drückstellers ausgewählt wird und die Auswahl des Zeichens durch Drücken des Dreh-Drückstellers bestätigt wird.

Um hierbei die Eingabe der einzelnen Zeichen für den Benutzer zu erleichtern, werden nach der Eingabe eines Zeichens jeweils nur die Zeichen zur Auswahl angezeigt, deren Verwendung zu einer gültigen Eingabe führt. Hierbei werden also nicht angezeigte Zeichen übersprungen so daß ein Benutzer eine Zeichenfolge nicht in der ihm gewohnten Weise eingeben kann, sondern den Bildschirm aufmerksam beobachten muß. Sobald die eingegebene Zeichenfolge nur noch eine einzige in der vorgegebenen Liste befindliche Bezeichnung ergeben kann, wird die vollständige Bezeichnung angezeigt, ohne daß eine weitere Zeichen- oder Buchstabeneingabe erforderlich wäre.

Bei einem anderen bekannten Eingabeverfahren, das von der Firma Tegic Communications Inc. Seattle, USA, unter der Bezeichnung T9™ vertrieben wird, werden Worte über ein Tastenfeld mit neun Tasten eingegeben, wobei jeder Taste mehrere Buchstaben zugeordnet sind. Für jede eingegebene Tastenkombination wird dabei ein entsprechendes Wort aus einem gespeicherten Lexikon ausgewählt. Ergeben sich dabei Mehrdeutigkeiten, wie sie bei kurzen Wörtern mit zwei oder drei Buchstaben durchaus vorkommen können, so werden nach der Eingabe der vollständigen Tastenkombination für das einzugebende Wort die dieser Tastenkombination entsprechenden Worte in Form einer Auswahlliste angezeigt.

Weiter ist aus der EP 0 581 929 B 1 ein Verfahren zur Eingabe von alphanumerischen Informationen bekannt, bei dem eine übliche Telefontastatur verwendet wird, deren einzelnen Tasten jeweils zusätzlich zu ihrer Ziffernfunktion drei Buchstaben zugeordnet sind. Bei diesem bekannten Verfahren erfolgt die Eingabe von alphanumerischen Informationen durch Drücken der Zifferntasten, während durch Drücken der Stern- oder Rauten-Taste das Eingabe-Ende bestätigt wird. Nach dem eine Tastenkombination für die vollständige gewünschte Bezeichnung eingegeben wurde, werden entweder diese Bezeichnung oder verschiedene Bezeichnungen angezeigt, die der eingegebenen Tastenkombination entsprechen, so daß dann die gewünschte Bezeichnung aus den angezeigten Bezeichnungen ausgewählt werden kann.

Bei diesem bekannten Verfahren ist es ferner möglich, nur eine Teil-Tastenkombination für die gewünschte Bezeichnung einzugeben, um dann durch Drücken der Stern- oder Rauten-Taste die Anzeige einer Liste der mit der eingegebenen Teilzeichenfolge oder Tastenkombination übereinstimmenden Bezeichnungen anzufordern. Aus den angezeigten Bezeichnungen kann dann wiederum eine ausgewählt werden.

Außerdem ist es bekannt, das Scrollen durch lange Suchlisten dadurch zu vereinfachen und zu beschleunigen, daß die Anfangsbuchstaben eines Suchbegriffs über eine Tastatur eingegeben werden, wobei dann der entsprechende Listenabschnitt angezeigt wird.

Die US 5 825 306 beschreibt im Zusammenhang mit einem Navigationssystem für Fahrzeuge ein Verfahren zum Auswählen von Bezeichnungen aus einer vorgegebenen Liste, bei dem eine auszuwählenden Bezeichnung Zeichen für Zeichen mit Hilfe eines sogenannten Touchscreens (Berührungsbildschirm) eingegeben wird. Nach jeder Zeicheneingabe wird die Anzahl der in der Liste verbleibenden Zielbezeichnungen angezeigt, so daß ein Benutzer entscheiden kann, ob er auf einen Listenanzeigemodus umschalten soll oder nicht. Ist die Anzahl der in der Liste verbliebenen Zielbezeichnungen auf einen vorbestimmten Wert abgesunken, so wird die Liste angezeigt, so daß die gewünschte Zielbezeichnung aus der angezeigten Liste ausgewählt werden kann.

Besteht die Liste nur noch aus einer Zielbezeichnung, so wird diese Zielbezeichnung angezeigt und für die weitere Verarbeitung im Navigationssystem ausgewählt.

Der Erfindung liegt die Aufgabe zugrunde, ein weiteres Verfahren der Eingangs genannten Art bereitzustellen, das insbesondere durch Vereinfachung der Auswahl von Bezeichnungen die Handhabung eines elektrischen oder elektronischen Geräts erleichtert.

Diese Aufgabe wird durch das Verfahren nach Anspruch 1 gelöst. Vorteilhafte Weiterbildungen und Ausgestaltungen der Erfindungsind in den Unteransprüchen beschrieben.

Erfindungsgemäß ist also bei einem Verfahren der eingangsgenannten Art vorgesehen, daß aus der vollständig angezeigten Zeichenliste nur solche Zeichen eingebbar sind, die eine bisher eingegebene Zeichenfolge so ergänzen, daß die dann eingegebene Zeichenfolge Bestandteil zumindest einer Bezeichnung in der vorgegebenen Liste ist. Vorteilhafterweise ist dabei vorgesehen, daß ein Warnton erzeugt wird, wenn ein nicht eingebbares Zeichen aus der Zeichenliste ausgewählt wird.

Hierdurch läßt sich die Eingabe von Zeichen, die zu einer nicht in der Liste vorhandenen Bezeichnung führen würde, zuverlässig verhindern, so daß dem Benutzer umständliche Korrekturen erspart bleiben. Somit wird die Handhabung der Eingabevorrichtung für den Benutzer wesentlich erleichtert, da der Benutzer insbesondere beim Scrollen durch die Zeichenliste einen Zeiger, der einen jeweils ausgewählten Buchstaben anzeigt, stets um dieselbe Anzahl von Zeichenplätzen verschieben muß, um von einem bestimmten Buchstaben zu einem anderen bestimmten Buchstaben zu gelangen, und zwar unabhängig davon, ob zwischen diesem beiden Buchstaben liegende Buchstaben auswählbar sind oder nicht.

Durch die erfindungsgemäß vereinfachte Handhabung einer Zeichenliste, in Verbindung mit der automatischen Umstellung vom Zeicheneingabemodus in einen Auswahllistenmodus wird nicht nur erreicht, daß ein Benutzer zur Auswahl einer bestimmten Bezeichnung, z. B. eines Städtenamens oder eines Namens aus einem Telefonbuch nur die jeweils kleinste erforderliche Anzahl von Zeichen einzugeben braucht, die benötigt wird, um die vorgegebene Liste soweit zu einer Unterliste zu reduzieren, daß sämtliche Bezeichnungen der Unterliste auf einer verfügbaren Anzeigeeinrichtung angezeigt werden können, sondern auch daß ein Benutzer die Zeicheneingabe in der ihm gewohnten Weise durchführen kann, so daß die Eingabe von Bezeichnungen wesentlich erleichtert ist. Darüberhinaus kann durch die automatische Umschaltung vom Zeicheneingabemodus in den Auswahllistenmodus eine gesonderte Eingabeende- oder Unschalttaste eingespart werden.

Um zuverlässig sicherzustellen, daß der Benutzer nur die unbedingt erforderliche Anzahl von Zeichen einzugeben braucht, ist bei einer Ausgestaltung der Erfindung vorgesehen, daß im Zeicheneingabemodus eine der auszuwählenden Bezeichnung entsprechende Zeichenfolge, Zeichen für Zeichen eingegeben wird und jeweils nach der Eingabe eines Zeichens die Anzahl der Bezeichnungen ermittelt wird, deren Anfangszeichenfolgen mit der nach der jeweiligen Zeicheneingabe vorliegenden Zeichenfolge übereinstimmt, um ggf. in den Auswahllistenmodus umzuschalten, in dem die Bezeichnungen, deren Anfangszeichenfolgen mit der bisher eingegebenen Zeichenfolge übereinstimmen, angezeigt werden, so daß aus den angezeigten Bezeichnungen die gewünschte Bezeichnung auswählbar ist.

Bei einer besonders vorteilhaften Ausgestaltung der Erfindung ist vorgesehen, daß sowohl die Zeicheneingabe im Zeicheneingabemodus als auch die Auswahl einer Bezeichnung im Auswahllistenmodus mit eine Suchfunktion und eine Bestätigungsfunktion aufweisenden Stellmitteln, insbesondere mit einem Dreh-Drück-Steller durchgeführt wird. Die Verwendung von Stellmitteln mit Such- und Bestätigungsfunktion, wie z. B. Wipptasten oder dergleichen, und insbesondere von Dreh-Drückstellern ermöglicht es, sowohl die Zeicheneingabe als auch die Listenauswahl mit ein und den selben Stellmitteln ohne Änderung der jeweiligen Stellmittelfunktionen durchzuführen, wodurch die Handhabung des elektrischen oder elektronischen Geräts für den Benutzer wesentlich erleichtert wird.

Eine andere zweckmäßige Weiterbildung der Erfindung zeichnet sich dadurch aus, daß die in der Liste gespeicherten Bezeichnungen, deren Anfangszeichenfolge mit der jeweils bisher eingegebenen Zeichenfolge übereinstimmt, zu einer Unterliste zusammengefaßt werden, die entweder angezeigt wird oder die nach der Eingabe des nächsten Zeichens zum Feststellen der Bezeichnungen, die noch mit der erweiterten Zeichenfolge übereinstimmen, und zum Bilden einer weiter eingeschränkten Unterliste verwendet wird.

Die Erfindung wird im folgenden beispielsweise anhand der Zeichnung näher erläutert. In dieser zeigt:
**Figur 1** ein schematisches Blockschaltbild eines elektronischen Geräts mit Anzeige- und Eingabemitteln,
**Figur 2** eine Darstellung eines Bildschirms der Anzeigemittel während eines Zeicheneingabemodus und
**Figur 3** eine Anzeige auf dem Bildschirm der Anzeigemittel nach dem Wechseln in den Auswahllistenmodus.

In den verschiedenen Figuren der Zeichnung sind einander entsprechende Elemente mit gleichen Bezugszeichen versehen.

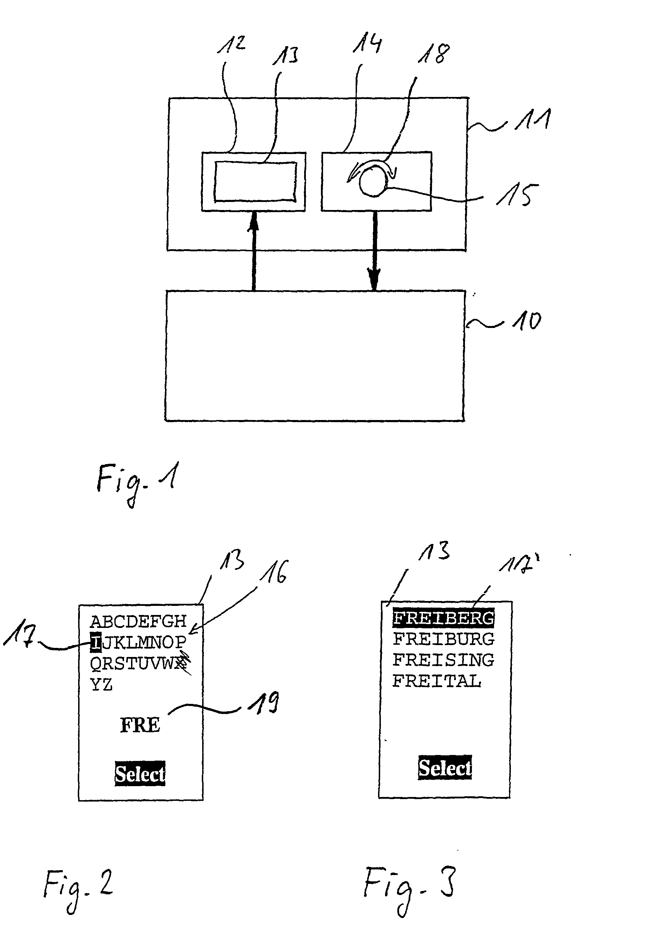

Wie in Figur 1 dargestellt, umfaßt ein elektronisches Gerät, z. B. ein Navigationssystem, ein Mobiltelefon oder ein Handapparat eines Schnurlostelefons, eine Haupteinheit 10 und eine Benutzerschnittstelle 11. Die Haupteinheit umfaßt dabei in nicht näher dargestellter Weise sämtliche für die jeweilige Funktion des elektronischen Geräts erforderlichen Baugruppen, wie z. B. ein Zentralprozessor, Programmspeicher, Datenspeicher, Sende- und Empfangseinrichtungen und dergleichen. Die Benutzerschnittstelle 11 weist eine Anzeigeeinrichtung 12 mit einem Bildschirm 13 zur Anzeige alphanumerischer Zeichen sowie eine Eingabeeinrichtung 14 mit einem Stellmittel auf, das andeutungsweise als Dreh-Drücksteller 15 dargestellt ist.

Das erfindungsgemäße Verfahren wird nun mit Bezug auf die Figuren 2 und 3 näher erläutert.

Soll beispielsweise bei einem Navigationssystem aus einer Liste der verfügbaren Städte eine Stadt, z. B. "FREIBURG" ausgewählt werden, so zeigt der Bildschirm 13 nach dem Einstellen des Eingabe- bzw. Auswahlmodus eine Buchstabenliste 16 an, aus der einzelne Buchstaben mit Hilfe eines Zeigers 17 ausgewählt werden können. Der Zeiger 17 läßt sich dabei durch Drehen des Dreh-Drückstellers 15 in Richtung des Doppelpfeils 18 vor oder zurück durch die Buchstabenliste 16 bewegen. Sobald der Zeiger 17 auf den gewünschten Buchstaben zeigt, wird durch Drücken des Dreh-Drückstellers 15 die Auswahl dieses Buchstabens bestätigt, also dieser Buchstabe ausgewählt und auf dem Bildschirm 13 als zeichen folge 19 dargestellt.

Hierbei wird der Zeiger 17 durch Betätigen des Dreh-Drückstellers 15 in der üblichen Weise verschoben, obwohl jeweils nur solche Buchstaben aus der Liste eingegeben werden können, die zu einer sinnvollen Ergänzung der bereits eingegebenen Zeichenfolge 19 führen.

Unter der Annahme eines Navigationssystems für Deutschland sind nach der Eingabe der Buchstabenfolge "FRE" die Buchstaben "F; G; J; K; O; P; Q; V; W; X; Z" für eine weitere Eingabe gesperrt, da es in Deutschland zumindest keine größeren Orte gibt, in deren Namen nach der Buchstabenfolge "FRE" einer dieser Buchstaben folgt. Würde ein Benutzer versehentlich statt des gewünschten "I" das dazu benachbarte Zeichen "J" auswählen, so würde diese Auswahl nicht zu einer Eingabe führen, da das Zeichen "J" aufgrund der bereits eingegebenen Zeichenfolge nicht eingebbar ist. Zweckmäßigerweise wird dem Benutzer dabei durch ein Warnsignal, insbesondere durch einen Warnton angezeigt, daß keine Eingabe erfolgt ist. Entsprechend der Darstellung von Figur 2 sind die von einer Eingabe ausgeschlossenen Buchstaben nicht weiter markiert, so daß ein Benutzer die Auswahl aus der Zeichenliste in üblicher Weise vornimmt, wobei er vor nicht sinnvollen Fehleingaben geschützt ist.

Es ist aber auch möglich, vorzusehen, daß die nicht eingebbaren Buchstaben ausgeblendet oder als nicht eingebbar gekennzeichnet werden, um dem Benutzer das schnellere Auffinden der zulässigen Zeichen zu ermöglichen. Hierbei ist jedoch erfindungsgemäß vorgesehen, daß beim Suchlauf des Zeigers durch die Buchstabenliste jeder einzelne Zeichenplatz berücksichtigt wird.

Figur 2 zeigt die Situation, in der nach der Auswahl der Anfangszeichenfolge "FRE" der Zeiger 17 auf den Buchstaben "I" gestellt ist. Das erfindungsgemäße Auswahlverfahren arbeitet hier nach der Eingabe der ersten drei Zeichen noch im Zeicheneingabemodus, da für Erläuterungszwecke angenommen wird, daß die Anzahl der in der vorgegebenen Liste gespeicherten Städte, die mit "FRE" beginnen, noch wesentlich größer ist als eine darstellbare Anzahl von Städtenamen, die hier mit fünf angenommen wird. Sobald durch Drücken des Dreh-Drückstellers 15 die Auswahl des Buchstaben "I" bestätigt ist, und die Anfangszeichenfolge nunmehr "FREI" ist, reduziert sich im angenommenen Beispiel die Anzahl der zu dieser Zeichenfolge passenden Städtenamen auf vier, so daß diese Anzahl kleiner als die vorgegebene Anzahl ist. Automatisch, also ohne weiteres Zutun des Benutzers wechselt nun das erfindungsgemäße Verfahren in den Auswahllistenmodus über.

Durch die Auswahl der einzugebenden Zeichen aus einer Zeichenliste lassen sich Mehrdeutigkeiten, wie sie bei der Verwendung von Tastenblöcken mit Mehrfachbelegung der einzelnen Tasten zwangsläufig auftreten, zuverlässig verhindern, so daß die Anzahl der zu der eingegebenen Zeichenfolge passenden Bezeichnung schnell reduziert werden kann und weniger Tastendrücke notwendig sind.

Figur 3 zeigt den Bildschirm 13 im Auswahllistenmodus wobei jeder angezeigte Städtename durch einen Zeiger 17' ausgewählt werden kann. Nachdem das Verfahren automatisch zum Auwahllistenmodus gewechselt hat und die Bildschirmdarstellung sich in der dargestellten Weise geändert hat, läßt sich der Zeiger 17' durch Drehen des Dreh-Drückstellers 15 auf den gewünschten Begriff, also auf den gewünschten Städtenamen "FREIBURG" verschieben, um diese Auswahl dann durch Drücken des Dreh-Drückstellers 15 zu bestätigen.

Diese Vorgehensweise ist besonders dann von Vorteil, wenn bereits eine kleine Anzahl von zwei oder drei Zeichen einer langen Bezeichnung ausreichen, um diese Bezeichnung oder eine geringe Anzahl entsprechender Bezeichnungen zu identifizieren.

Befinden sich beispielsweise in einem privaten Telefonbuch nur zwei Namen mit M so reicht bereits die Eingabe des Anfangsbuchstabens "M" aus, um diese beiden Bezeichnungen unabhängig von ihrer Länge zur Anzeige zu bringen.

Anstelle des erläuterten Dreh-Drückstellers 15 können auch geeignete Suchtasten, mit denen ein rechts-links oder auf-ab Suchlauf realisiert werden kann, verwendet werden. Derartigen Tasten kann dann beispielsweise auch eine Bestätigungsfunktion zugeordnet werden. Neben der Verwendung von Dreh-Drückstellern eignet sich der Einsatz von Suchlauftasten besonders für Mobiltelefone oder dergleichen, während bei Navigationssystemen vorzugsweise Dreh-Drücksteller eingesetzt werden.

Das erfindungsgemäße Verfahren bietet den Vorteil, daß ein Benutzer bei der Eingabe einer Bezeichnung zum frühest möglichen Zeitpunkt eine übersichtliche Unterliste von Bezeichnungen präsentiert bekommt, aus der er dann die gewünschte Bezeichnung auswählen kann. Gleichzeitig verhindert die Erfindung, daß ein Benutzer den Wechsel in einen Auswahllistenmodus zu einem zu früheren Zeitpunkt veranlaßt, zu dem die Anzahl der zur eingegebenen Zeichenfolge passenden Bezeichnungen noch so groß ist, daß keine übersichtliche Anzeige möglichst ist, oder daß er die Umschaltung so spät ausführt, daß er unnötiger Weise eine Vielzahl von Zeichen eingeben mußte.

## Patentansprüche

1. Verfahren zum Auswählen von Bezeichnungen aus einer vorgegebenen Liste, bei dem von einem Zeicheneingabemodus, in dem alphanumerische Zeichen einzeln nacheinander durch Auswahl der einzugebenden Zeichen aus einer Zeichenliste (16) eingegeben werden, in einen Auswahllistenmodus gewechselt werden kann, **dadurch gekennzeichnet, dass**
- aus der vollständig angezeigten Zeichenliste (16) nur solche Zeichen eingebbar sind, die eine bisher eingegebene Zeichenfolge (19) so ergänzen, dass die dann eingegebene Zeichenfolge (19) Bestandteil zumindest einer Bezeichnung in der vorgegebenen Liste ist, und
- automatisch in den Auswahllistenmodus gewechselt wird, wenn die Anzahl der in der Liste gespeicherten Bezeichnungen, deren jeweilige Anfangszeichenfolgen mit der jeweils bisher eingebenden Zeichenfolge (19) übereinstimmen, kleiner oder gleich einer vorgegebenen Anzahl ist.

2. Verfahren nach Anspruch 1, **dadurch gekennzeichnet, daß** ein Warnton erzeugt wird, wenn ein nicht eingebbares Zeichen aus der Zeichenliste (16) ausgewählt wird.

3. Verfahren nach Anspruch 1 oder 2, **dadurch gekennzeichnet, daß**
- im Zeicheneingabemodus eine der auszuwählenden Bezeichnung entsprechende Zeichenfolge Zeichen für Zeichen eingegeben wird und
- jeweils nach der Eingabe eines Zeichens die Anzahl der Bezeichnungen ermittelt wird, deren Anfangszeichenfolgen mit der nach der jeweiligen Zeicheneingabe vorliegenden Zeichenfolge (19) übereinstimmt, um ggf. in den Auswahllistenmodus umzuschalten, in dem die Bezeichnungen, deren Anfangszeichenfolgen mit der bisher eingegebenen Zeichenfolge (19) übereinstimmen, angezeigt werden, so daß aus den angezeigten Bezeichnungen die gewünschte Bezeichnung auswählbar ist.

4. Verfahren nach Anspruch 1, 2 oder 3, **dadurch gekennzeichnet, daß** sowohl die Zeicheneingabe im Zeicheneingabemodus als auch die Auswahl einer Bezeichnung im Auswahllistenmodus mit einer Suchfunktion und eine Bestätigungsfunktion aufweisenden Stellmitteln, insbesondere mit einem Dreh-Drück-Steller (15) durchgeführt wird.

5. Verfahren nach einem der vorstehenden Ansprüche, **dadurch gekennzeichnet, daß** die in der Liste gespeicherten Bezeichnungen, deren Anfangszeichenfolge mit der jeweils bisher eingegebenen Zeichenfolge (19) übereinstimmt, zu einer Unterliste zusammengefaßt werden, die entweder angezeigt wird oder die nach der Eingabe des nächsten Zeichens zum Feststellen der Bezeichnungen, die noch mit der erweiterten Zeichenfolge übereinstimmen, und zum Bilden einer weiter eingeschränkten Unterliste verwendet wird.

## Claims

1. Method for the selection of designations from a specified list, wherein it is possible to switch from a character input mode, in which alphanumeric characters are input individually and successively by selection of the characters to be input from a character list, to a selection list mode, **characterised in that**
- from the completely displayed character list (16), only those characters can be input which so supplement the previously input character string (19) that the newly input character string (19) forms part of at least one designation in the specified list, and **in that**
- the system automatically switches to the selection list mode whenever the number of listed designation the starting character strings of which coincide with the previously input character string (19) is less than or equal to a predetermined number.

2. Method according to claim 1, **characterised in that** a warning tone is generated whenever a character which cannot be input is selected from the character list (16).

3. Method according to claim 1 or 2, **characterised in that**
- in the character input mode, a character string corresponding to the designation to be selected is input character by character, and **in that**
- following the inputting of a character, the number of designations the starting character strings of which coincide with the character string (19) in existence after the relevant character inputting action is determined in order to switch, if applicable, to the selection list mode, in which the designations the starting character strings of which coincide with the previously input character string (19) are displayed, so that the required designation can be selected from the displayed designations.

4. Method according to claim 1, 2 or 3, **characterised in that** both the inputting of characters in the character input mode and the selection of a designation in the selection list mode is executed using control means featuring a search function and an actuating function, in particular a rotary push-button control (15).

5. Method according to any of the preceding claims, **characterised in that** the listed designations the starting character strings of which coincide with the previously input character string (19) are combined to form a sub-list, which is either displayed or, following the inputting of the next character, used to identify the designations still coinciding with the extended character string or to generate a more restricted sub-list.

## Revendications

1. Procédé de sélection de désignations dans une liste prédéterminée, pour lequel on peut passer d'un mode d'introduction de caractères, dans lequel des caractères alphanumériques sont introduits les uns après les autres par une sélection des caractères à introduire à partir d'une liste de caractères (16), en un mode à liste de sélection, **caractérisé en ce que**
- à partir de la liste de caractères (16) indiqués complètement, ne peuvent être introduits que des caractères qui complètent une succession de caractères (19) introduits jusqu'ici, de manière que la succession de caractères (19) introduits alors fasse partie au moins d'une désignation dans la liste prédéterminée, et
- un changement est accompli automatiquement, en passant au mode à liste de sélection, lorsque le nombre des désignations, mémorisées dans la liste, dont des successions de caractères initiaux respectifs coïncident avec la succession de caractères (19) chaque fois introduits jusqu'ici, est inférieur ou identique à un nombre prédéterminé.

2. Procédé selon la revendication 1, **caractérisé en ce qu'**un signal d'avertissement est produit lorsqu'un caractère non susceptible d'être introduit est sélectionné dans la liste de caractères (16).

3. Procédé selon la revendication 1 ou 2, **caractérisé en ce que**,
- en mode d'introduction de caractères, une succession de caractères, correspondant à la désignation à sélectionner, est introduite, caractères par caractères, et
- chaque fois, après introduction d'un caractère, chaque fois est déterminé le nombre des désignations, dont la succession de caractères initiaux coïncide avec la succession de caractères (19) actuels après l'introduction de caractères respectifs, pour, le cas échéant, passer en mode à liste de sélection, auquel les désignations, dont les suites de caractères initiaux coïncident avec la succession de caractères (19) introduits jusqu'ici, sont affichées, de manière à pouvoir sélectionner la désignation souhaitée à partir des désignations affichées.

4. Procédé selon la revendication 1, 2 ou 3, **caractérisé en ce que**, tant l'introduction de caractères en mode d'introduction de caractères, qu'également la sélection d'une désignation en mode à liste de sélection, est effectuée avec des moyens de réglage, en particulier, avec un régleur à pression et rotation (15), présentant une fonction de recherche et une fonction de confirmation.

5. Procédé selon l'une des revendications précédentes, **caractérisé en ce que** les désignations stockées dans la liste, dont la succession de caractères initiaux coïncide avec la succession de caractères (19) introduits chaque fois jusqu'ici, sont groupées en une sous-liste qui, soit est affichée, soit qui, après introduction du caractère immédiatement le suivant, est utilisée, pour constater les désignations qui coïncident encore avec la succession de caractères attendus et pour former une autre sous-liste restreinte.
